# EUROPEAN PATENT SPECIFICATION

(11) **EP 4 234 305 B1**
(45) Date of publication and mention of the grant of the patent: **22.10.2025**
(21) Application number: 22158960.9
(22) Date of filing: 25.02.2022
(51) Int. Cl.: H04L 67/12, B64D 11/00, B60K 35/00, B64D 45/00, H04W 4/80, H04W 76/10, G08G 5/21, G08G 5/53, G06F 1/16, G08G 5/55, H04W 4/42, H04W 76/14, H04W 84/18

(54) **FLIGHT CREW CODED INTERFACING DEVICES**
FLUGBESATZUNGSKODIERTE SCHNITTSTELLENVORRICHTUNGEN
DISPOSITIFS D'INTERFACE CODÉS POUR L'ÉQUIPAGE DE VOL

(43) Date of publication of application: 30.08.2023
(73) Proprietor: Airbus Operations GmbH, 21129 Hamburg (DE)
(72) Inventor: Segelhorst, Hendrik, 21129 Hamburg (DE); Schüßeler, Christian, 21129 Hamburg (DE)
(74) Representative: Isarpatent

(56) References cited:
- US-A1- 2016 239 802
- US-A1- 2017 236 195
- US-A1- 2018 013 985
- US-B1- 9 043 938

## Description

### FIELD OF THE INVENTION

The present invention pertains to interfacing devices on board of an aircraft which allow interaction between a user of the interfacing device with input/output interfaces installed in the aircraft.

Although applicable for any kind of vehicle, the present invention and the corresponding underlying problems will be explained in further detail in conjunction with an aircraft.

### BACKGROUND OF THE INVENTION

Sufficiently advanced and modern aircraft cabins need a number of electronic interaction systems in order to control the abundance of electronic cabin systems by the cabin crew. Such interaction systems are likely to have increasingly less access points to digital user interfaces. Instead, multi-functional interaction systems become more abstract systems so that human users may run the risk of losing contact with physical elements in the real world.

Haptic, visual or auditive feedback is typically lacking in such abstract systems so that the aversion of users towards such devices might ultimately lead to inadequate utilization of advanced electronic cabin systems.

Document EP 1 973 299 discloses a wireless controllable electrical or electronic functional unit for an aircraft having means for identifying the installation location in the aircraft.

Document US 10,606,378 B2 discloses an interface device for a human-machine interface includes a display on a first surface of the device, an input interface adapted to detect one or more of touch input, rotation input, and push input directed to the device, a controller configured to generate control instructions based on input received from the input interface, the control instructions including display instructions for controlling output on the display, and an output interface configured to send at least a subset of the control instructions from the controller to a receiving device, the device being removably coupled to the receiving device.

Document US 9,671,954 B1 discloses tactile feedback devices that may be removably coupled to a touchscreen interface and methods for the configuration of a virtual control of a device display according to characteristics of a tactile feedback device.

Document US 2010/0259375 A1 discloses an instrument control panel that is easily customized and reconfigured, and yet provides the familiar tactile sensation of physical knobs, sliders, and buttons. The instrument control panel comprises one or more interface components that are removably coupled to an interface display wherein the interface components communicate with one or more control components disposed behind the interface display.

US 9,043,938 B1 discloses a system and method for establishing a secured wireless connection allowing the exchange of information between a wireless device and aircraft equipment. The secured wireless access system may require a user controlling the wireless device to interact with an onboard interface to initiate a connection. The user may be further required to enter a randomly generated security passcode to pair the mobile device to the aircraft equipment. Further security measures may be implemented, such as tiered user access levels restricting certain equipment and/or information based upon a user identity of the user requesting access.

US 2017/236195 A1 discloses a passenger catering system for a passenger transport vehicle operated via the server.

US 2016/239802 A1 discloses systems and methods for managing logistics information related to a container using a container interface display apparatus. A scanner on the container interface display apparatus identifies an item during loading of the container. An association between the container and the item is recorded in memory of the container interface display apparatus as part of managed logistics information related to the container.

However, there is still a need for more elaborated tools that enables flight crew members to interact with electronic cabin systems.

### SUMMARY OF THE INVENTION

The invention is defined by the independent claims. The dependent claims define advantageous embodiments.

It is one of the objects of the invention to find improved solutions for interfacing devices on board of an aircraft which allow interaction between a user of the interfacing device with input/output interfaces installed in the aircraft.

At least some of these objects are achieved by the subject matter of the respective independent claims. Advantageous embodiments are described in the dependent claims related to the independent claims.

According to a first aspect of the invention, a communication system on board of an aircraft comprises a plurality of interfacing devices, each interfacing device comprising a processor, a wireless communication module coupled to the processor and a visual, haptic and/or auditive output system coupled to the processor. The communication system further comprises a plurality of communication interfaces, each communication interface installed at the backside of a dedicated interfacing location of a number of dedicated interfacing locations of a housing wall inside the cabin of the aircraft, and a plurality of electronic cabin systems installed in the aircraft, each electronic cabin system of the plurality of electronic cabin systems connected to one communication interface of the plurality of communication interfaces. The mobile interfacing devices are configured to be removably attached to one dedicated interfacing location of the number of dedicated interfacing locations, to establish a wireless communication link between the removably attached interfacing device and the communication interface installed at the backside of the interfacing location, and to establish a wireless input/output connection link between the removably attached interfacing device and the electronic cabin system via the communication interface.

A second aspect of the invention relates to a method for facilitating access to electronic cabin systems installed in an aircraft. The method comprises the steps of removably attaching an interfacing device to one dedicated interfacing location of a number of dedicated interfacing locations of a housing wall inside the cabin of the aircraft, establishing a wireless communication link between the removably attached interfacing device and a communication interface installed at the backside of the one dedicated interfacing location, the communication interface being connected to the electronic cabin system, establishing a wireless input/output connection link between the removably attached interfacing device and the electronic cabin system via the communication interface, and outputting data transmitted over the wireless input/output connection link at a visual, haptic or auditive output system of the removably attached interfacing device.

One of the main ideas of the invention is to provide an eco-system of removable, mobile and wirelessly communicating interfacing devices with input and output modules for receiving information and entering commands which allow interaction between a user of the interfacing device with electronic equipment installed in the aircraft. Due to the removable nature of the interfacing devices, the electronic equipment installed in the aircraft does not necessarily need to be readily accessible for direct interaction with a human user. Instead, the electronic equipment installed in the aircraft may be equipped with electronic input/output interfaces and the interfacing devices may serve as a flexible proxy for a human user to interact with the electronic input/output interfaces of the electronic equipment of the aircraft.

It is a particular advantage of the invention that electronic equipment of the aircraft to which input/output communication needs to be established does not need dedicated human-machine interfaces. Moreover, the installation position of the electronic equipment of the aircraft may be selected or optimized under other aspects than accessibility by a human user.

Moreover, due to the removability of the interfacing devices, access to electronic equipment installed in the aircraft may be advantageously restricted to authorized users physically carrying a verified interfacing device. The usage of interfacing devices as means for interaction between a user and electronic equipment installed in the aircraft may therefore be regarded as part of a multi-factor authentication environment where the interfacing devices serve as physical tokens for authentication with the electronic equipment.

The interfacing devices may advantageously serve as interface to otherwise hidden digital content. Thus, controlling the various functions of a digital subsystem of electronic cabin equipment can be performed with physical world representation. Moreover, the interfacing devices serve as a multi-purpose tool enabling the flight crew members to fulfil aircraft identification and access rights policies.

According to some embodiments of the first aspect, the mobile interfacing devices may include a magnetic attachment element. Attachment by magnetic force to interfacing locations is a convenient way to form a mechanically secure, yet easily removable connection between an interfacing device and the corresponding interfacing location.

According to some embodiments of the first aspect, the interfacing devices may be configured to form a mobile ad-hoc network, MANET, among each other via their wireless communication modules. This allows users of the interfacing device to be selectively and controllably notified remotely, even when they are not in the vicinity of the notifying electronic cabin equipment.

According to some embodiments of the first aspect, the interfacing devices each comprise an authentication module and/or a programmable configuration storage.

This enables the establishment of a hierarchical access rights and authentication policies among crew members of an aircraft.

According to some embodiments of the first aspect, the interfacing locations may be included in boundary walls of electric appliances, in cabin walls of the aircraft cabin and/or in outer walls of cabin monuments within the aircraft. One advantage of such a system with multiple interfacing locations is the possibility to convert otherwise blank spaces into input/output interfaces without actually having to fixedly install an input/output device at that location. The interfacing locations may allow the underlying communication interface that would otherwise be dormant by default or inaccessible by any other means for input/output communication to be activated in the presence of specifically defined interfacing devices, turning the combined system of attached interfacing device and communication interface into a human-machine interface (HMI).

In some embodiments of the second aspect, attaching the interfacing device to the interfacing location may include attaching the interfacing device to the interfacing location by magnetic force.

According to some embodiments of the second aspect, establishing the wireless input/output connection link may include authenticating the attached interfacing device by the electronic cabin system.

According to some embodiments of the second aspect, the interfacing locations may be included in boundary walls of electric appliances, in cabin walls of the aircraft cabin and/or in outer walls of cabin monuments within the aircraft.

According to some embodiments of the second aspect, the interfacing device may comprise a programmable configuration storage and/or an authentication module.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a side view of an interfacing device according to some embodiments of the invention;
- Fig. 2: schematically illustrates a perspective top view onto an interfacing device according to some embodiments of the invention;
- Fig. 3: schematically illustrates a functional block diagram of an interfacing device in communication with an electronic cabin system according to some embodiments of the invention;
- Fig. 4: schematically illustrates an aircraft with a communication system according to some further embodiments of the invention; and
- Fig. 5: schematically illustrates stages of a method facilitating access to electronic cabin systems installed in an aircraft according to some further embodiments of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

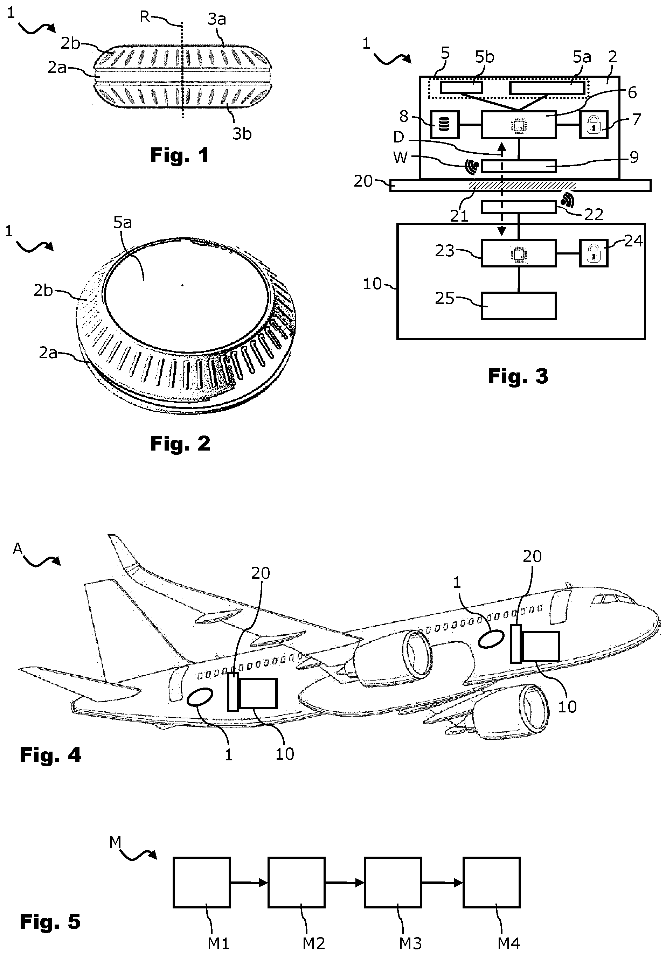

Figures 1 and 2 schematically illustrate a side view and a perspective top view, respectively, of an interfacing device 1 that may be used in a communication system on board of an aircraft, such as the aircraft A of Figure 4. A communication system may be equipped with multiple interfacing devices 1.

The interfacing devices 1 are flight crew coded, i.e. each member of the flight crew may have its personal interfacing device 1 acting as a personal key, communication enabler and/or notifier. It may be used to gain access to functions of certain electronic cabin systems and/or cabin monuments such as galleys, galley equipment, flight attendant panels, cabin lighting, cabin audio systems, passenger call systems, cockpit access systems and so on.

As exemplarily illustrated in Figures 2 and 3 the interfacing device includes a housing and is generally double-sided. For example, the interfacing device 1 may be generally disc-shaped with a flat top side 3a, a flat bottom side 3b and an axis R of rotational symmetry. The top side 3a may - without limitation of generality - be used for visually displaying information items. To that end, the interfacing device 1 may be equipped with an electronic display 5a at the top side 3a, such as an LED or LCD display. The bottom side 3b may for example be equipped with adequate attachment means for attaching the interfacing device 1 to an underlying surface. For example, the bottom side 3b may be equipped with magnetic attachment elements. By using magnetic attachment elements, the interfacing device 1 may be self-orienting, i.e. there is some type of poka-yoke mechanism preventing unintentional wrong handling. The interfacing device 1 is dimensioned to be generally easy to carry and handle by a human user and is shaped, coloured and patterned to be easily recognizable and discernible from other personal mobile equipment.

The housing of the interfacing device 1 may have a circular ring 2b above a central indentation 2a running around the circumference of the device. Various features of the interfacing device 1, including the circular ring 2b and the central indentation 2a may have functions of input devices. For example, some haptic features of the interfacing device 1 may be used to input a click, to perform a turning motion or to perform a tilting motion. Each of the various movements may be translated by the interfacing device 1 into suitable electronic commands to wirelessly transfer over an input/output communication link with a corresponding communication partner.

The interfacing device 1 may include input/output devices other than display, such as for example vibration elements, loudspeakers, microphones, alert lights or similar. Those auditive and/or haptic output devices may serve to notify, alert or call the user of the interfacing device 1. For example, the interfacing device 1 may be used to locate and/or identify flight crew members or may be used as a remote communication tool among each other. The input/output devices of the interfacing device 1 may also aid in tracking the location of the device.

A functional block diagram of a more generalized interfacing device 1 in communication with an electronic cabin system 10 on board of an aircraft, such as the aircraft A of Figure 4, is shown in Figure 3. The interfacing device 1 includes a central processor 6, a suitable energy storage such as a battery or an accumulator (not explicitly shown), a wireless communication module 9 coupled to the processor 6 and one or more input/output devices 5 coupled to the processor 6. The one or more input/output devices 5 may include a visual, haptic and/or auditive output system 5a such as a display, a loudspeaker and/or a vibration module, and one or more input devices 5b such as microphones, buttons, keys, touchpads or similar. The interfacing device 1 may also have sensors integrated therein such as GPS devices, temperature sensors, brightness sensors, gyroscopes, touch sensors and similar. The interfacing device 1 may further include a programmable configuration storage 8 having operating information for operating the processor 6 stored therein and/or an authentication module 7 which may be used for authenticating a user of the interfacing device 1 with a communication partner, such as the electronic cabin system 10.

The aircraft includes a number of communication interfaces 22 which are installed at the backside of one of a number of dedicated interfacing locations 21. The interfacing locations 21 may be dedicated and explicitly marked surfaces of housing walls 20 inside the cabin of the aircraft. For example, the interfacing locations 21 may be included in boundary walls of electric appliances, in cabin walls of the aircraft cabin and/or in outer walls of cabin monuments within the aircraft, such as galleys, sanitary facilities and/or the cockpit.

A plurality of electronic cabin systems 10 is installed in the aircraft and each of the electronic cabin systems 10 is connected to one or more of the communication interfaces 22. The connection may be wired or wireless. When approaching the surface of a cabin commodity with a housing wall 20 having an interfacing location 21 integrated therein, the interfacing location 21 may trigger a visual feedback to show that it is ready for the interfacing device 1 to couple. When a magnetic attachment element is used and the interfacing location 21 is equipped with a corresponding magnetic attachment counterpart, the interfacing device 1 may pull towards the interfacing location 21 and snap in place by itself. Of course, there may other mechanisms that hold the interfacing device 1 in place at the interfacing location 21, such as corresponding grooves/nuts and bolts, sunken receptacle surfaces at the interfacing locations 21 or other mechanical means for attachment.

Once the interfacing device 1 has attached to the interfacing location 21, the interfacing device 1 will try to establish a wireless communication link W between its own wireless communication module 9 and the corresponding counterpart communication interface 22 installed at the backside of the interfacing location 21. To that end, the material of the interfacing location 21 needs to be sufficiently transparent to the wireless communication medium, such as radio frequency waves, infrared waves, ultrasonic waves or light waves (Li-Fi). The communication interface 22 itself is wirelessly or wirebound connected to one or more associated electronic cabin systems 10 in the vicinity. Such electronic cabin systems 10 may for example be galleys, galley equipment (microwave devices, refrigerators, heaters etc.), passenger call devices, flight attendant panels, cockpit access systems and similar.

When the wireless communication link W has been successfully established, the interfacing device 1 may then try to establish a wireless input/output connection link D with one of the associated electronic cabin systems 10 via the communication interface 22. For example, the electronic cabin system 10 may have a communication processor 23 connected to the main functional devices 25 of the electronic cabin system 10 and configured to maintain the wireless input/output connection link D with the processor 6 of the interfacing device 1. To that end, the interfacing device 1 may obtain authentication information as needed from the authentication module 7 and authenticate the user of the interfacing device 1 with the communication processor 23 which may authenticate the user information with credibility information stored in an authentication module 24 of the electronic cabin system 10. Any known authentication technique may be used for purposes of authentication, such as passphrase based authentication, token base authentication, challenge handshake authentication or similar.

When the wireless input/output connection link D has been established, the interfacing device 1 and the main functional devices 25 of the electronic cabin system 10 may then exchange input/output data with the wireless communication link W as information carrier. In particular, a specific menu or interfacing items may be displayed/presented to the user at a visual, haptic or auditive output system 5a. The menu or preset interaction possibilities enable the user to gain access to functions of the main functional devices 25 of the electronic cabin system 10, such as sending control instructions from the interfacing device 1 to the electronic cabin system 10 or gathering current states of operation or settings from the electronic cabin system 10.

The user may also "latch" the interfacing device 1 to one or more particular electronic cabin systems 10 by inputting a corresponding latching instruction to the electronic cabin systems 10. This latch may persist for a certain timespan even after detachment of the interfacing device 1 from the interfacing location 21, for example for a pre-defined time period, until another interfacing device 1 accesses the particular electronic cabin system 10 or until the latched interfacing device 1 is expressly decoupled from the particular electronic cabin system 10 again. For example, a cabin crew member may latch its personal interfacing device 1 to a number of passenger call devices so that the cabin crew member will be notified by visual, sound and/or vibration of the interfacing device 1 when one or more the passenger call devices it has been latched onto are activated.

If there are multiple interfacing devices 1 used on board of an aircraft, those interfacing devices 1 may be configured to form a mobile ad-hoc network, MANET, among each other via their wireless communication modules 9. MANETs are a decentralized type of wireless network which does not need a pre-existing infrastructure, such as routers in wired networks or access points in wireless networks. Instead, each interfacing device 1 may form a node participating in routing by forwarding data for other interfacing devices 1. The network connectivity and the used routing algorithm may then determine dynamically which interfacing devices are used to forward data to other interfacing devices. MANETs are self-configuring, dynamic networks in which participating interfacing devices 1 are free to move within the reach of the underlying wireless communication medium. The formation of a MANET among participating interfacing devices 1 may enable the interfacing devices 1 to act as half-duplex signal or voice communication devices in which a user may push to talk to other interfacing devices 1, similar to a set of walkie-talkies or pagers. To that end, each of the interfacing devices 1 needs to include an input device such as a paging button and/or a microphone and an output device such as a vibration alarm, a notification light and/or a loudspeaker.

Figure 5 schematically illustrates stages of a method M for facilitating access to electronic cabin systems 10 installed in an aircraft, such as the aircraft A depicted exemplarily in Figure 4. In a first stage M1, an interfacing device 1 is attached to one of a number of dedicated interfacing locations 21 of a housing wall 20 inside the cabin of the aircraft A, for example by using magnetic attachment elements in the interfacing device 1 and corresponding counterpart elements at the interfacing locations 21. The interfacing locations 21 may for example be included in boundary walls of electric appliances, in cabin walls of the aircraft cabin and/or in outer walls of cabin monuments within the aircraft A. In particular, the interfacing locations 21 do not need to be human-machine interfaces (HMIs) by themselves, i.e. touch displays, keypads or similar. Specifically, the interfacing locations 21 may become HMIs only upon attachment of a fitting interfacing device 1.

In a second stage M2, a wireless communication link W is established between the interfacing device 1 and a communication interface 22 installed at the backside of the interfacing location 21. As explained above, the communication interface 22 may be dormant by default and inaccessible by any other means than a dedicated interfacing device 1. The communication interface 22 is connected to one or more electronic cabin systems 10 and enables the information flow of input/output data items between an attached interfacing device 1 and the one or more associated electronic cabin systems 10. To that end, the attached interfacing device 1 may need to be authenticated

In a third stage M3, a wireless input/output connection link D is established between the interfacing device 1 and the electronic cabin system 10 via the communication interface 22. This operation may include authenticating the attached interfacing device 1 by the electronic cabin system 10 using a suitable authentication protocol and information stored in an authentication module 7 of the interfacing device 1. For example, the authentication module 7 may store a device-specific token for token based authentication, may calculate responses to challenges set by the electronic cabin system 10 for challenge-response based authentication or may additionally require a user to enter a passphrase (PIN code or PIN movement pattern of input actions) into the interfacing device 1 for multi-factor authentication.

Data transmitted over the input/output connection link D may then be output at a visual, haptic or auditive output system 5a of the interfacing device 1, for example an LCD or LED display, loudspeakers, a vibration element, a notification light or similar. Analogously, the user may perform input actions via various input devices 5b of the interfacing devices 1 to convey commands or control signals to the connected electronic cabin system 10.

In the foregoing detailed description, various features are grouped together in one or more examples or examples with the purpose of streamlining the disclosure. It is to be understood that the above description is intended to be illustrative, and not restrictive. It is intended to cover all alternatives and modifications as encompassed within the scope of the invention as defined by the appended claims.

Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as encompassed within the scope of the invention as defined by the appended claims.

In the appended claims and throughout the specification, the terms "including" and "in which" are used as the plain-English equivalents of the respective terms "comprising" and "wherein," respectively. Furthermore, "a" or "one" does not exclude a plurality in the present case.

## Claims

1. A method (M) for facilitating access to electronic cabin systems (10) installed in an aircraft (A), the method (M) comprising:
removably attaching (M1) an interfacing device (1) to one dedicated interfacing location (21) of a number of dedicated interfacing locations (21) of a housing wall (20) inside the cabin of the aircraft (A);
establishing (M2) a wireless communication link (W) between the removably attached interfacing device (1) and a communication interface (22) installed at the backside of the one dedicated interfacing location (21), the communication interface (22) being connected to the electronic cabin system (10);
establishing (M3) a wireless input/output connection link (D) between the removably attached interfacing device (1) and the electronic cabin system (10) via the communication interface (22); and
outputting (M4) data transmitted over the wireless input/output connection link (D) at a visual, haptic or auditive output system (5a) of the removably attached interfacing device (1), the output data transmitted over the wireless input/output connection link (D) being data exchanged between the removably attached interfacing device (1) and main functional devices (25) of the electronic cabin system (10).

2. The method (M) of claim 1, wherein removably attaching (M1) the interfacing device (1) to the one dedicated interfacing location (21) includes removably attaching (M1) the interfacing device (1) to the one dedicated interfacing location (21) by magnetic force.

3. The method (M) of claim 1 or 2, wherein establishing the wireless input/output connection link (D) includes authenticating the removably attached interfacing device (1) by the electronic cabin system (10).

4. The method (M) of one of claims 1 to 3, wherein the number or dedicated interfacing locations (21) are included in boundary walls of electric appliances, in cabin walls of the aircraft cabin and/or in outer walls of cabin monuments within the aircraft (A).

5. The method (M) of one of claims 1 to 4, wherein the interfacing device (1) comprises a programmable configuration storage (8).

6. The method (M) of one of claims 1 to 5, wherein the interfacing device (1) comprises an authentication module (7).

7. A communication system on board of an aircraft (A), the communication system comprising:
a plurality of interfacing devices (1), each interfacing device (1) comprising a processor (6), a wireless communication module (9) coupled to the processor (6) and a visual, haptic and/or auditive output system (5a) coupled to the processor (6);
a plurality of communication interfaces (22), each communication interface (22) installed at the backside of a dedicated interfacing location (21) of a number of dedicated interfacing locations (21) of a housing wall (20) inside the cabin of the aircraft (A); and
a plurality of electronic cabin systems (10) installed in the aircraft (A), each electronic cabin system (10) of the plurality of electronic cabin systems (10) connected to one communication interface (22) of the plurality of communication interfaces (22);
wherein each interfacing device (1) is configured to:
be removably attached (M1) to one dedicated interfacing location (21) of the number of dedicated interfacing locations (21);
establish (M2) a wireless communication link (W) between the removably attached interfacing device (1) and the communication interface (22) installed at the backside of the interfacing location (21);
establish (M3) a wireless input/output connection link (D) between the removably attached interfacing device (1) and the electronic cabin system (10) via the communication interface (22); and
output (M4) data transmitted over the wireless input/output connection link (D) at the visual, haptic or auditive output system (5a) of the removably attached interfacing device (1), the output data transmitted over the wireless input/output connection link (D) being data exchanged between the removably attached interfacing device (1) and main functional devices (25) of the electronic cabin system (10).

8. The communication system of claim 7, wherein each interfacing device (1) of the plurality of interfacing devices (1) includes a magnetic attachment element.

9. The communication system of claim 7 or 8, the number of dedicated interfacing locations (21) is included in boundary walls of electric appliances, in cabin walls of the aircraft cabin and/or in outer walls of cabin monuments within the aircraft (A).

10. The communication system of one of claims 7 to 9, wherein each interfacing device (1) of the plurality of interfacing devices (1) comprises a programmable configuration storage (8).

11. The communication system of one of claims 7 to 10, wherein each interfacing device (1) of the plurality of interfacing devices (1) comprises an authentication module (7).

12. The communication system of one of claims 7 to 11, wherein the interfacing devices (1) are configured to form a mobile ad-hoc network, MANET, among each other via their wireless communication modules (9).

13. An aircraft (A) comprising a communication system of one of claims 7 to 12.

## Patentansprüche

1. Verfahren (M) zum Ermöglichen des Zugriffs auf elektronische Kabinensysteme (10), die in einem Luftfahrzeug (A) installiert sind, wobei das Verfahren (M) Folgendes umfasst:
abnehmbares Befestigen (M1) einer Schnittstellenvorrichtung (1) an einem dedizierten Schnittstellenplatz (21) einer Anzahl dedizierter Schnittstellenplätze (21) einer Gehäusewand (20) innerhalb der Kabine des Luftfahrzeugs (A);
Herstellen (M2) eines drahtlosen Kommunikationslinks (W) zwischen der abnehmbar befestigten Schnittstellenvorrichtung (1) und einer Kommunikationsschnittstelle (22), die an der Rückseite des einen dedizierten Schnittstellenplatzes (21) installiert ist, wobei die Kommunikationsschnittstelle (22) mit dem elektronischen Kabinensystem (10) verbunden ist;
Herstellen (M3) eines drahtlosen Eingabe-/Ausgabeverbindungslinks (D) zwischen der abnehmbar befestigten Schnittstellenvorrichtung (1) und dem elektronischen Kabinensystem (10) über die Kommunikationsschnittstelle (22); und
Ausgeben (M4) von Daten, die über den drahtlosen Eingabe-/Ausgabeverbindungslink (D) an einem visuellen, haptischen oder auditiven Ausgabesystem (5a) der abnehmbar befestigten Schnittstellenvorrichtung (1) übertragen werden, wobei die Ausgabedaten, die über den drahtlosen Eingabe-/Ausgabeverbindungslink (D) übertragen werden, Daten sind, die zwischen der abnehmbar befestigten Schnittstellenvorrichtung (1) und den Hauptfunktionsvorrichtungen (25) des elektronischen Kabinensystems (10) ausgetauscht werden.

2. Verfahren (M) nach Anspruch 1, wobei das abnehmbare Befestigen (M1) der Schnittstellenvorrichtung (1) an dem einen dedizierten Schnittstellenplatz (21) abnehmbares Befestigen (M1) der Schnittstellenvorrichtung (1) an dem einen dedizierten Schnittstellenplatz (21) durch Magnetkraft umfasst.

3. Verfahren (M) nach Anspruch 1 oder 2, wobei das Herstellen des drahtlosen Eingabe-/Ausgabeverbindungslinks (D) Authentifizieren der abnehmbar befestigten Schnittstellenvorrichtung (1) durch das elektronische Kabinensystem (10) umfasst.

4. Verfahren (M) nach einem der Ansprüche 1 bis 3, wobei die Anzahl dedizierter Schnittstellenplätze (21) in Begrenzungswänden von Elektrogeräten, in Kabinenwänden der Luftfahrzeugkabine und/oder in Außenwänden von Kabinenmonumenten innerhalb des Luftfahrzeugs (A) umfasst sind.

5. Verfahren (M) nach einem der Ansprüche 1 bis 4, wobei die Schnittstellenvorrichtung (1) einen programmierbaren Konfigurationsspeicher (8) umfasst.

6. Verfahren (M) nach einem der Ansprüche 1 bis 5, wobei die Schnittstellenvorrichtung (1) ein Authentifizierungsmodul (7) umfasst.

7. Kommunikationssystem an Bord eines Luftfahrzeugs (A), wobei das Kommunikationssystem Folgendes umfasst:
eine Mehrzahl von Schnittstellenvorrichtungen (1), wobei jede Schnittstellenvorrichtung (1) einen Prozessor (6), ein Drahtloskommunikationsmodul (9), das mit dem Prozessor (6) gekoppelt ist, und ein visuelles, haptisches und/oder auditives Ausgabesystem (5a) umfasst, das mit dem Prozessor (6) gekoppelt ist;
eine Mehrzahl von Kommunikationsschnittstellen (22), wobei jede Kommunikationsschnittstelle (22) an der Rückseite eines dedizierten Schnittstellenplatzes (21) einer Anzahl dedizierter Schnittstellenplätze (21) einer Gehäusewand (20) innerhalb der Kabine des Flugzeugs (A) installiert ist; und
eine Mehrzahl elektronischer Kabinensysteme (10), die in dem Luftfahrzeug (A) installiert ist, wobei jedes elektronische Kabinensystem (10) der Mehrzahl elektronischer Kabinensysteme (10) mit einer Kommunikationsschnittstelle (22) der Mehrzahl von Kommunikationsschnittstellen (22) verbunden ist;
wobei jede Schnittstellenvorrichtung (1) zu Folgendem ausgelegt ist:
abnehmbar an einem dedizierten Schnittstellenplatz (21) der Anzahl dedizierter Schnittstellenplätze (21) befestigt zu sein (M1);
Herstellen (M2) eines drahtlosen Kommunikationslinks (W) zwischen der abnehmbar befestigten Schnittstellenvorrichtung (1) und der Kommunikationsschnittstelle (22), die an der Rückseite des Schnittstellenplatzes (21) installiert ist;
Herstellen (M3) eines drahtlosen Eingabe-/Ausgabeverbindungslinks (D) zwischen der abnehmbar befestigten Schnittstellenvorrichtung (1) und dem elektronischen Kabinensystem (10) über die Kommunikationsschnittstelle (22); und
Ausgeben (M4) von Daten, die über den drahtlosen Eingabe-/Ausgabeverbindungslink (D) an dem visuellen, haptischen oder auditiven Ausgabesystem (5a) der abnehmbar befestigten Schnittstellenvorrichtung (1) übertragen werden, wobei die über den drahtlose Eingabe-/Ausgabeverbindungslink (D) übertragenen Ausgabedaten Daten sind, die zwischen der abnehmbar befestigten Schnittstellenvorrichtung (1) und den Hauptfunktionsvorrichtungen (25) des elektronischen Kabinensystems (10) ausgetauscht werden.

8. Kommunikationssystem nach Anspruch 7, wobei jede Schnittstellenvorrichtung (1) der Mehrzahl von Schnittstellenvorrichtungen (1) ein magnetisches Befestigungselement umfasst.

9. Kommunikationssystem nach Anspruch 7 oder 8, wobei die Anzahl dedizierter Schnittstellenstellen (21) in Begrenzungswänden von Elektrogeräten, in Kabinenwänden der Flugzeugkabine und/oder in Außenwänden von Kabinenmonumenten innerhalb des Luftfahrzeugs (A) enthalten ist.

10. Kommunikationssystem nach einem der Ansprüche 7 bis 9, wobei jede Schnittstellenvorrichtung (1) der Mehrzahl von Schnittstellenvorrichtungen (1) einen programmierbaren Konfigurationsspeicher (8) umfasst.

11. Kommunikationssystem nach einem der Ansprüche 7 bis 10, wobei jede Schnittstellenvorrichtung (1) der Mehrzahl von Schnittstellenvorrichtungen (1) ein Authentifizierungsmodul (7) umfasst.

12. Kommunikationssystem nach einem der Ansprüche 7 bis 11, wobei die Schnittstellenvorrichtungen (1) dazu ausgelegt sind, über ihre Drahtloskommunikationsmodule (9) ein mobiles Ad-hoc-Netzwerk, MANET, untereinander zu bilden.

13. Luftfahrzeug (A), umfassend ein Kommunikationssystem nach einem der Ansprüche 7 bis 12.

## Revendications

1. Procédé (M) destiné à faciliter l'accès à des systèmes électroniques de cabine (10) installés dans un aéronef (A), le procédé (M) comprenant les étapes suivantes :
fixer de manière amovible (M1) un dispositif d'interface (1) à un emplacement d'interface dédié (21) d'un certain nombre d'emplacements d'interface dédiés (21) d'une paroi d'enceinte (20) à l'intérieur de la cabine de l'aéronef (A) ;
établir (M2) une liaison de communication sans fil (W) entre le dispositif d'interface fixé de manière amovible (1) et une interface de communication (22) installée à l'arrière de l'emplacement d'interface dédié (21), l'interface de communication (22) étant connectée au système électronique de cabine (10) ;
établir (M3) une liaison de connexion d'entrée/sortie sans fil (D) entre le dispositif d'interface fixé de manière amovible (1) et le système électronique de cabine (10) par l'intermédiaire de l'interface de communication (22) ; et
délivrer en sortie (M4) des données transmises sur la liaison de connexion d'entrée/sortie sans fil (D) au niveau d'un système de sortie visuelle, haptique ou audio (5a) du dispositif d'interface amovible (1), les données de sortie transmises sur la liaison de connexion d'entrée/sortie sans fil (D) étant des données échangées entre le dispositif d'interface fixé de manière amovible (1) et les principaux dispositifs fonctionnels (25) du système électronique de cabine (10).

2. Procédé (M) selon la revendication 1, dans lequel la fixation amovible (M1) du dispositif d'interface (1) au premier emplacement d'interface dédié (21) comprend la fixation amovible (M1) du dispositif d'interface (1) audit emplacement d'interface dédié (21) par une force magnétique.

3. Procédé (M) selon la revendication 1 ou la revendication 2, dans lequel l'établissement de la liaison de connexion d'entrée/sortie sans fil (D) comprend l'authentification du dispositif d'interface fixé de manière amovible (1) par le système électronique de cabine (10).

4. Procédé (M) selon l'une des revendications 1 à 3, dans lequel les multiples emplacements d'interface ou les emplacements d'interface dédiés (21) sont inclus dans des parois de délimitation des appareils électriques, dans des parois de cabine de la cabine de l'aéronef et/ou dans des parois extérieures des éléments fixes de cabine à l'intérieur de l'aéronef (A).

5. Procédé (M) selon l'une des revendications 1 à 4, dans lequel le dispositif d'interface (1) comprend une mémoire de stockage de configuration programmable (8).

6. Procédé (M) selon l'une des revendications 1 à 5, dans lequel le dispositif d'interface (1) comprend un module d'authentification (7).

7. Système de communication embarqué dans un aéronef (A), le système de communication comprenant :
une pluralité de dispositifs d'interface (1), chaque dispositif d'interface (1) comprenant un processeur (6), un module de communication sans fil (9) couplé au processeur (6) et un système de sortie visuelle, haptique et/ou audio (5a) couplé au processeur (6) ;
une pluralité d'interfaces de communication (22), chaque interface de communication (22) étant installée à l'arrière d'un emplacement d'interface dédié (21) d'un certain nombre d'emplacements d'interface dédiés (21) d'une paroi d'enceinte (20) à l'intérieur de la cabine de l'aéronef (A) ; et
une pluralité de systèmes électroniques de cabine (10) installés dans l'aéronef (A), chaque système électronique de cabine (10) de la pluralité de systèmes électroniques de cabine (10) étant connecté à une interface de communication (22) de la pluralité d'interfaces de communication (22) ;
chaque dispositif d'interface (1) étant configuré pour :
être fixé de manière amovible (M1) à un emplacement d'interface dédié (21) parmi les multiples emplacements d'interface dédiés (21) ;
établir (M2) une liaison de communication sans fil (W) entre le dispositif d'interface fixé de manière amovible (1) et l'interface de communication (22) installée à l'arrière de l'emplacement d'interface (21) ;
établir (M3) une liaison de connexion d'entrée/sortie sans fil (D) entre le dispositif d'interface fixé de manière amovible (1) et le système électronique de cabine (10) par l'intermédiaire de l'interface de communication (22) ; et
délivrer en sortie (M4) des données transmises sur la liaison de connexion d'entrée/sortie sans fil (D) au niveau du système de sortie visuelle, haptique ou audio (5a) du dispositif d'interface amovible (1), les données de sortie transmises sur la liaison de connexion d'entrée/sortie sans fil (D) étant des données échangées entre le dispositif d'interface fixé de manière amovible (1) et les principaux dispositifs fonctionnels (25) du système électronique de cabine (10).

8. Système de communication selon la revendication 7, dans lequel chaque dispositif d'interface (1) de la pluralité de dispositifs d'interface (1) comprend un élément de fixation magnétique.

9. Système de communication selon la revendication 7 ou la revendication 8, dans lequel les multiples emplacements d'interface dédiés (21) sont inclus dans des parois de délimitation d'appareils électriques, dans des parois de cabine de la cabine de l'aéronef et/ou dans des parois extérieures des éléments fixes de cabine à l'intérieur de l'aéronef (A).

10. Système de communication selon l'une des revendications 7 à 9, dans lequel chaque dispositif d'interface (1) de la pluralité de dispositifs d'interface (1) comprend une mémoire de stockage de configuration programmable (8).

11. Système de communication selon l'une des revendications 7 à 10, dans lequel chaque dispositif d'interface (1) de la pluralité de dispositifs d'interface (1) comprend un module d'authentification (7).

12. Système de communication selon l'une des revendications 7 à 11, dans lequel les dispositifs d'interface (1) sont configurés pour former un réseau ad hoc mobile, MANET, entre eux par l'intermédiaire de leurs modules de communication sans fil (9).

13. Aéronef (A) comprenant un système de communication selon l'une des revendications 7 à 12.
